# EUROPEAN PATENT SPECIFICATION

(11) **EP 4 184 268 B1**
(45) Date of publication and mention of the grant of the patent: **16.07.2025**
(21) Application number: 21209620.0
(22) Date of filing: 22.11.2021
(51) Int. Cl.: G05B 23/02, G06N 3/08

(54) **TRAINING PREDICTION MODELS FOR PREDICTING UNDESIRED EVENTS DURING EXECUTION OF A PROCESS**
TRAINIEREN VON VORHERSAGEMODELLEN ZUR VORHERSAGE UNERWÜNSCHTER EREIGNISSE WÄHREND DER AUSFÜHRUNG EINES PROZESSES
FORMATION DE MODÈLES DE PRÉDICTION POUR LA PRÉDICTION D'ÉVÉNEMENTS INDÉSIRABLES LORS DE L'EXÉCUTION D'UN PROCESSUS

(43) Date of publication of application: 24.05.2023
(73) Proprietor: ABB SCHWEIZ AG, 5400 Baden (CH)
(72) Inventor: ABUKWAIK, Hadil, 69469 Weinheim (DE); SHARMA, Divyasheel, 560048 Bangalore (IN); KLOEPPER, Benjamin, 68199 Mannheim (DE); KOTRIWALA, Arzam Muzaffar, 68526 Ladenburg (DE); RODRIGUEZ, Pablo, 69488 Birkenau (DE); SCHMIDT, Benedikt, 69117 Heidelberg (DE); TAN, Ruomu, 68309 Mannheim (DE); K R, Chandrika, 560078 Bangalore (IN); BORRISON, Reuben, 68782 Brühl (DE); DIX, Marcel, 78476 Allensbach (DE); DOPPELHAMER, Jens, 68526 Ladenburg (DE)
(74) Representative: Maiwald GmbH

(56) References cited:
- US-A1- 2019 235 484
- US-A1- 2021 016 786

## Description

### FIELD OF THE INVENTION

The invention relates to improving the execution of processes on industrial plants and/or electric networks, so as to reduce the likelihood of at least one undesired event occurring.

### BACKGROUND

Industrial plants for the execution of industrial processes, as well as electric networks, are protected by interlock conditions. Such interlock conditions are very frequently used on equipment to guard against operator errors, like grounding an electric circuit while it is at the same time energized by the power source (thereby shorting out the power source to ground). For the execution of processes in the plant or network, there are more safety interlock rules that enforce certain limits on state variables or other variables of the plant. For example, if a pressure gauge of a vacuum chamber that houses a materials processing equipment registers an increase in the pressure beyond what is acceptable for the system, the equipment may be turned off, so as to prevent damage to the system.

Safety interlock rules frequently dictate drastic countermeasures against an unsafe state. For example, the plant or a part thereof may be brutally cut off from the power supply, irrespective of how tedious or difficult it then becomes to get the process up and running again. For example, turning off the heat in a chemical reaction vessel may cause its liquid contents to cool down and solidify. Using the reaction vessel again then requires a laborious manual removal using hammers and chisels at best, and is impossible at worst. The triggering of a safety interlock event may therefore be a major setback.

US 2021/016 786 A1 discloses a computer-implemented method of predicting vehicle failures. This method exploits a vehicle diagnostics dataset, which records historic diagnostic warning events and an associated timing for each diagnostic warning event, and a vehicle fault dataset, which records historic vehicle fault events and an associated timing for each vehicle fault event. A predictive algorithm computes the likelihood of a vehicle fault event occurring should a diagnostic warning event of a target type occur.

US 2019/235 484 A1 discloses a system for maintenance predictions generated using a single deep learning architecture for three modes including a failure prediction mode, a remaining useful life mode, and a unified mode. Each mode is associated with an objective function and a transformation function. The single deep learning architecture is applied to learn parameters for an objective function through execution of a transformation function associated with a selected mode using historical data.

### OBJECTIVE OF THE INVENTION

It is therefore the objective of the invention to reduce the occurrence of safety interlock events by allowing to predict the occurrence of such events, and/or by actively avoiding those events based on such a prediction.

### DISCLOSURE OF THE INVENTION

The invention is defined by the appended claims. Embodiments and examples not covered by the claims are presented to illustrate, and facilitate the understanding of, the claimed invention.

The invention provides a method for training a prediction model for predicting the likelihood that at least one predetermined undesired event will occur during execution of a process. The process may be an industrial process that is executed in an industrial plant, such as a chemical process that converts one or more educts into one or more products by at least one chemical reaction. The process may also be an electrical process in an electric network, such as operation of an electric power grid. This method uses training samples with data that characterizes a state of the industrial process.

In the course of the method, training samples representing states of the process that do not cause the undesired event are obtained. Operation without undesired events occurring is the normal operating state of the plant or network; therefore, such training samples are in plentiful supply. The training samples are labelled with a pre-set low likelihood of the undesired event occurring, depending on the scale on which this likelihood is measured. For example, if the likelihood is measured as a probability, it may be set to a very low non-zero value, rather than to zero, to avoid any divide-by-zero errors at runtime.

That undesired events are fortunately rare, or do not occur at all, during normal operation of the plant or network is tied to the misfortune that very little (if any) training samples for states of the process that trigger such an undesired event are available. That is, the set of training samples is strongly imbalanced towards training samples representing normal operation. In order to train a prediction model to reliably predict the likelihood of an undesired event, a more balanced set of training samples is needed.

To this end, based at least in part on a process model and a set of predetermined rules that stipulate in which states of the process there is an increased likelihood of the undesired event occurring, further training samples are obtained. These further training samples represent states of the process with an increased likelihood to cause the undesired event, and are consequently labelled with this increased likelihood.

The process model may be a monolithic model of the process as a whole, but it may also be composed of sub-models at any desired level of granularity. For example, different sub-models may predict the future development of different aspects of the state of the process, which may correspond to different sub-units of the plant or network. For the sake of clarity, reference will be made to just one process model in the following.

In particular, the process model may be specifically configured to predict a future evolution of the state of the process based on at least one current and/or past state of the process. The so-predicted future states may then, for example, be checked against the predetermined rules for the occurrence of the undesired event. If the predicted evolution of the process leads to a state that, according to the predetermined rules, will cause the undesired event, then the current and/or past state from which this predicted evolution is determined may be deemed to be causal for the undesired event.

Preferably, the process model may comprise
- a machine learning model; and/or
- a simulation model; and/or
- a surrogate approximation of this simulation model.

Which type of process model is most advantageous depends on how much knowledge about the inner workings of the process (or any part thereof) is available. For example, if the process is a "black box", a machine learning model may be trained on inputs to this "black box" and outputs obtained in response, without a need to dive deeper into the inner workings of the process. If the inner workings of the process are well known and understood, a simulation model of the process based on that knowledge about the process may be used.

Simulation models can predict the future evolution of the process with a high fidelity. However, this comes at the price that a simulation model may be expensive to compute. The complex computations may take several hours or even more. For avoiding undesired events during the real-time execution of the process, however, being able to obtain results faster is more important than the highest level of fidelity.'

This is where a surrogate approximation of the simulation model may save large amounts of computation time. In return for a small sacrifice in fidelity, the computation may be speeded up so much that it can be even much faster than real-time. This in turn allows to compute multiple scenarios and explore multiple possible paths on which the process may evolve, depending on the action taken now. This is somewhat akin to the lossy compression of audio and video data that takes away some of the quality but reduces the bandwidth requirement so much that the data may be streamed in real-time.

Using the process model and the set of rules, the previously scarce set of training samples for states that may trigger the undesired event may be augmented to an arbitrary extent, so as to arrive at a more balanced set of training samples. This in turn allows for a supervised training of the prediction model. In this context, exploiting the predetermined set of rules yields the further advantage that these rules provide some level of abstraction from the exact internal behavior of the real process. This exact internal behavior is not always known. For example, in an industrial plant, some equipment may be bought and used as a "black box" with abstract technical specifications without access to its inner workings. A large-scale electricity grid is composed of many sub-networks that are run by different operators, and the inner complexity of these sub-networks is hidden behind abstract specifications. Just like the Earth can be abstracted to a point mass for some astronomical calculations, a power station may boil down to a handful of quantities, such as a maximum power output and a slew rate of the power output.

In the course of the supervised training, training samples are provided to be to-be-trained prediction model. The prediction model then outputs a prediction of the likelihood for occurrence of the undesired event in a state of the process represented by the respective sample. A difference between the so-obtained prediction on the one hand, and the label of the respective sample on the other hand, is rated by means of a predetermined loss function (or "cost function"). Examples of such loss functions are the cross-entropy and the log-likelihood.

Parameters that characterize the behavior of the prediction model are optimized such that, when predictions on further samples are made, the rating by the loss function is likely to improve. The training may stop in response to any suitable stopping criterion, such as the achieving of a certain prediction accuracy on the training samples, a number of training epochs, or convergence (i.e., failure of the parameters to change further). For example, in a neural network prediction model, the parameters comprise weights with which inputs to each neuron are summed to an activation of that neuron.

The predetermined rules may, for example, comprise safety interlock rules that specify under which circumstances a safety interlock event is to be triggered. Many such safety interlock rules trigger a safety interlock event in response to certain alarms being raised in the plant, and/or in response to certain state variables of the plant and/or process crossing certain pre-set thresholds. In an electric network, sub-networks are usually set to disconnect from each other if currents between them climb above hard limits. If the respective condition is met, this invariably leads to the event occurring. That is, the likelihood of the event occurring is then maximal (i.e., 1 on a scale of probabilities).

Thus, in a particularly advantageous embodiment, the undesired event comprises a safety interlock event that forces an at least partial stop and/or shutdown of the process, and/or of the industrial plant or electric network that is executing the process. Being able to predict these events, which were previously handled in a reactive manner, allows to handle them in a pro-active manner before they actually occur. For example, occurrence of these events may be avoided, and/or the consequences may be mitigated.

For other types of undesired events, the rules that connect states of the process to an increased likelihood of the event occurring may be softer. For example, each rule may carry a certain amount of "penalty points", and if the state of the process meets multiple rules at once, these "penalty points" accrue. The undesired event may then, for example, be coupled to the condition that at least a threshold amount of "penalty points" has accrued. In such a situation, no rule stipulates on its own that the event shall occur under a certain condition, but each rule that is met increases the likelihood for the event.

The likelihood of the undesired event occurring may be measured on any suitable scale. For example, the likelihood may be measured on a scale of a probability that this event occurs. This is an easily interpretable scale. Safety requirements, for example, may stipulate that the probability for certain events needs to be below a certain threshold.

For avoiding the occurrence of undesired events in real-time process execution, another notion of the likelihood may also be advantageous: The likelihood may be measured on a scale of closeness of the state of the process to a state that causes the undesired event to occur. This gives a direct guidance as to what may be done in order to reduce the likelihood of undesired events. This is somewhat akin to the risks of drone operations being measured in terms of closeness to the operations to critical airspaces or installations on the ground.

In a further advantageous embodiment, the method further comprises determining, based at least in part on the predetermined rules, which of the variables that characterize the state of the process have an impact on the likelihood of the undesired event occurring. These variables, and/or processing results obtained from these variables, may then be included in the training samples. That is, the state variables may be pre-filtered to reduce the complexity of the prediction model.

The training samples may, for example, comprise any sort of state variables of the process. For example, in a chemical process, the state variables may comprise temperatures, concentrations or other physical properties of substances, pressures, or mass flows. In an electrical process, the state variables may comprise voltages, currents, power amounts, temperatures, or switching states of switchable connections.

In a further advantageous embodiment, at least one statistical moment, and/or a time series, of at least one state variable of the process is included in the training samples. In particular, some kinds of prediction models, such as recurrent neural networks and transformer networks, are specifically adapted to process samples comprising time series, so as to directly learn from trends evident in such time series. Statistical moments of state variables may be included in the training samples to compress the information in the state variables.

In a further particularly advantageous embodiment, the prediction model obtains a prediction of the likelihood for occurrence of the undesired event at the end of a predetermined time window based on samples within this time window. In this manner, a temporal horizon for causality may be set. Also, it is then clear how much time is remaining for any remedial actions for the purpose of avoiding the undesired event.

In a further particularly advantageous embodiment, the behavior of the trained prediction model is approximated by means of a surrogate model that is computationally cheaper to evaluate than the trained prediction model. In this manner, some of the accuracy of the prediction is traded in for obtaining the prediction faster. In particular, as discussed before, if the prediction can be obtained faster than in real-time, multiple candidate actions for avoiding the occurrence of the undesired event may be tested using the prediction model. That is, "what-if" scenarios may be analyzed, and the best action may then be implemented on the process.

The ultimate purpose of the trained prediction model is to improve the execution of processes and pro-actively react to impending occurrences of undesired events, so as to avoid them. The invention also provides a method for executing a process on at least one industrial plant or in at least one electric network.

In the course of this method, one or more samples representing a state of the process are provided to a trained prediction model, and/or to a surrogate approximation thereof, so as to obtain a prediction of the likelihood for occurrence of the undesired event in a state of the process represented by the one or more samples.

This prediction is tested against at least one predetermined criterion. For example, this criterion may comprise a threshold value for the probability of the undesired event occurring, or for the closeness in parameter space of the current state of the process to a state that will trigger the undesired event.

In response to the criterion being met, an alarm is outputted to an operator of the process, and/or the execution of the process is modified with the goal of reducing the likelihood for occurrence of the undesired event. Such modification may entail a degradation of the execution. For example, the production rate of a product may be reduced or halted altogether, or some loads may be shed from the electric network.

While it is of course most desirable to run the process without any degradation, a degradation is usually a lot more graceful than the occurrence of a safety interlocking event. For example, temporarily getting less product out of a chemical process is a far lesser evil than having to clean out solidified substance from a reactor vessel by hammer and chisel, and shedding some loads from the electric network is a lot better than losing power in the network altogether.

In a further particularly advantageous embodiment, in order to modify the execution of the process, samples representing multiple candidate states of the process that are different from the current state of the process are provided to the prediction model. This yields likelihoods for occurrence of the undesired event for the candidate states. That is, options for states towards which the process might be moved may be explored in a "what-if" manner. Execution of the process may then be steered towards a candidate state with the least likelihood of the undesired event as a target state.

Steering the process may, for example, comprise altering set-point values provided to low-level controllers of the industrial plant or electric network executing the process, and/or enabling or disabling pieces of equipment or interconnections in the plant or network.

On many sites where an industrial plant or an electric installation is working to execute a process, many Internet of Things, loT, devices are participating in this work. These devices are communicating with an IoT edge system for the purpose of process control. This edge system has some processing power for evaluating a prediction model, but not enough processing power for training such a prediction model. But the edge system can delegate this work to a cloud platform with more processing power.

Therefore, in a further particularly advantageous embodiment, samples representing states of the process are collected by an edge system of an industrial plant or other site that participates in executing the process. The samples are provided to a cloud platform by the edge system. Based on these samples, the prediction model is trained and/or updated on the cloud platform. The cloud platform also creates a surrogate approximation for the trained and/or updated prediction model, and/or an update to such an already existing approximation. The surrogate approximation, and/or the update thereto, is provided back to the edge system. On the edge system, the surrogate approximation is evaluated, so as to obtain the prediction of the likelihood for occurrence of the undesired event.

The methods may be wholly or partially computer-implemented. The invention therefore also relates to one or more computer programs with machine-readable instructions that, when executed on one or more computers and/or compute instances, cause the one or more computers to perform one of the methods described above. In this context, a virtualization platform, a hardware controller, network infrastructure devices (such as switches, bridges, routers or wireless access points), as well as end devices in the network (such as sensors, actuators or other industrial field devices) that are able to execute machine readable instructions are to be regarded as computers as well.

The invention therefore also relates to a non-transitory storage medium, and/or to a download product, with the one or more computer programs. A download product is a product that may be sold in an online shop for immediate fulfillment by download. The invention also provides one or more computers and/or compute instances with the one or more computer programs, and/or with the one or more non-transitory machine-readable storage media and/or download products.

### DESCRIPTION OF THE FIGURES

In the following, the invention is illustrated using Figures without any intention to limit the scope of the invention. The Figures show:
Figure 1: Exemplary embodiment of the method 100 for training a prediction model;
Figure 2: Exemplary embodiment of the method 200 for executing a process;
Figure 3: Exemplary arrangement of an edge system and a cloud platform for keeping a surrogate approximation of a prediction model updated.

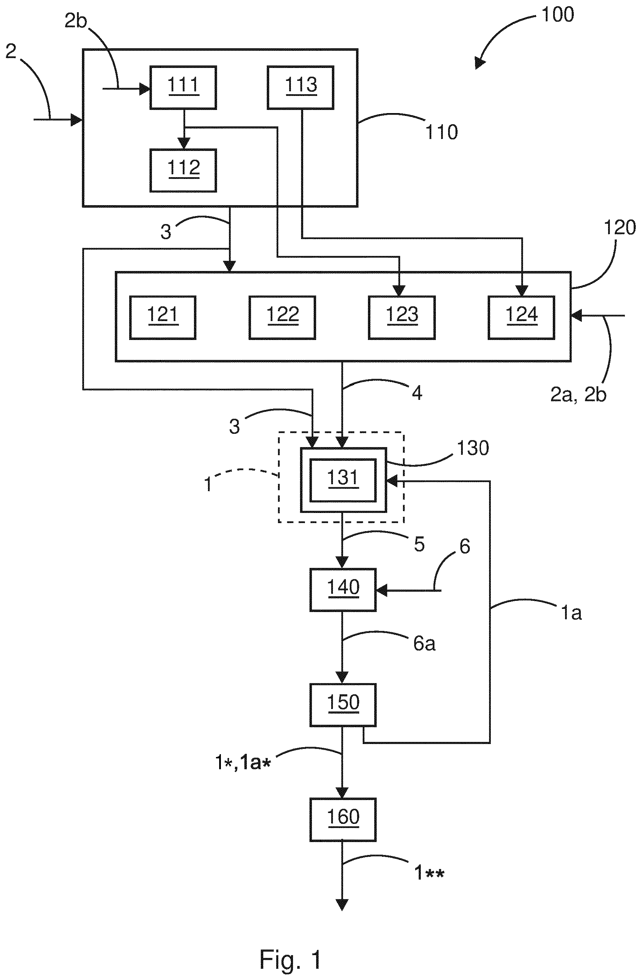

Figure 1 is a schematic flow chart of an exemplary embodiment of the method 100 for training a prediction model 1. The prediction model 1 is to predict a likelihood that at least one predetermined undesired event will occur during execution of a process 2.

In step 110, training samples 3 are obtained. These training samples 3 represent states of the process 2 that do not cause the undesired event. They are labelled with a pre-set low likelihood of the undesired event occurring.

In step 120, based at least in part on a process model 2a and a set of predetermined rules 2b that stipulate in which states of the process 2 there is an increased likelihood of the undesired event occurring, further training samples 4 are obtained. These further training samples 4 represent states of the process with an increased likelihood to cause the undesired event. They are therefore labelled with this increased likelihood.

In step 130, the training samples 3, 4 are provided to the to-be-trained prediction model 1. The prediction model 1 then outputs a prediction 5 of the likelihood for occurrence of the undesired event in a state of the process 2 that is represented by the respective sample 3, 4.

In step 140, a difference between the prediction 5 and the label of the respective sample 3, 4 is rated by means of a predetermined loss function 6. The loss function 6 yields a rating 6a.

In step 150, parameters 1a that characterize the behavior of the prediction model 1 are optimized such that, when predictions 5 on further samples 3, 4 are made, the rating 6a by the loss function 6 is likely to improve. The finally trained state of the parameters 1a is labelled with the reference sign 1a*. These finally optimized parameters 1a* characterize the behavior of the fully trained prediction model that is labelled with the reference sign 1*.

In step 160, the behavior of the trained prediction model 1* is approximated by means of a surrogate model 1** that is computationally cheaper to evaluate than the trained prediction model 1*.

According to block 111, it may be determined, based at least in part on the predetermined rules 2b, which of the variables that characterize the state of the process 2 have an impact on the likelihood of the undesired event occurring. These variables, and/or processing results obtained from these variables, may then be included in the training samples 3 according to block 112, and in the training samples 4 according to block 123.

According to block 113, respectively 124, at least one statistical moment, and/or a time series, of at least one state variable of the process 2, may be included in the training samples 3, respectively 4.

According to block 121, the process model 2a may be specifically configured to predict a future evolution of the state of the process 2 based on at least one current and/or past state of the process 2.

According to block 122, the process model 2a may comprise:
- a machine learning model; and/or
- a simulation model; and/or
- a surrogate approximation of this simulation model.

According to block 131, the prediction model 1 may produce a prediction 5 of the likelihood for occurrence of the undesired event at the end of a predetermined time window based on samples 3, 4 within this time window.

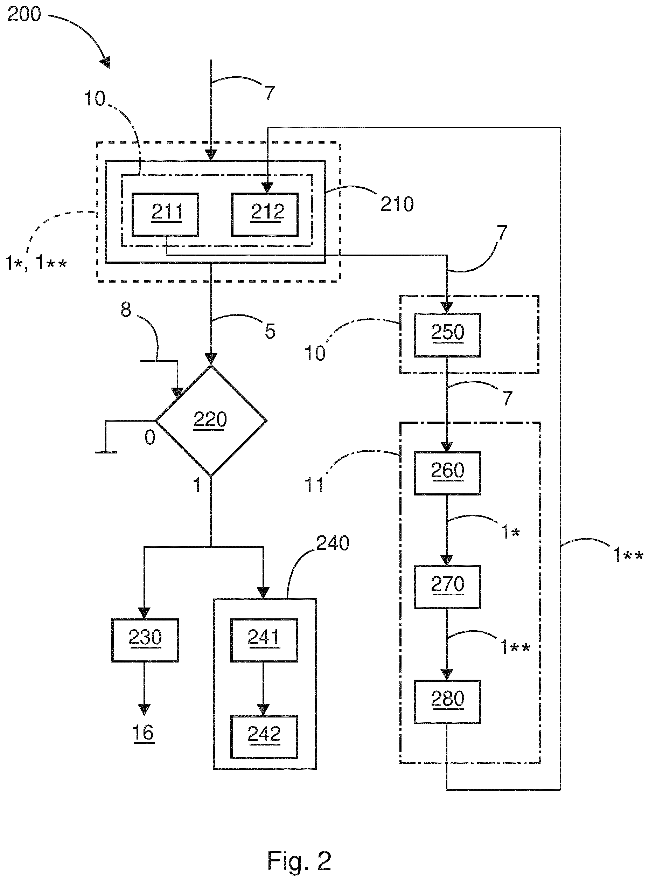

Figure 2 is a schematic flow chart of an exemplary embodiment of the method 200 for executing a process 2 on at least one industrial plant or in at least one electric network.

In step 210, one or more samples 7 representing a state of the process 2 are provided to a trained prediction model 1*, and/or to a surrogate approximation 1** thereof. The trained prediction model 1*, respectively the surrogate approximation 1**, then outputs a prediction 5 of the likelihood for occurrence of the undesired event in a state of the process 2 represented by the one or more samples.

In step 220, the prediction 5 is tested against at least one predetermined criterion 8.

If the criterion 8 is met (truth value 1), in step 230, an alarm may be outputted to an operator 16 of the process 2. Alternatively or in combination to this, in step 240, the execution of the process 2 may be modified with the goal of reducing the likelihood for occurrence of the undesired event.

According to block 211, samples representing states of the process 2 may be collected by an edge system 10 of an industrial plant or other site that participates in executing the process 2. In step 250, the edge system 10 may then provide the samples to a cloud platform 11.

In step 260, the cloud platform 11 may then train and/or update the prediction model 1 based on the samples 7 received from the edge system 10. The cloud platform 11 may then create, in step 270, a surrogate approximation 1** for the trained and/or updated prediction model 1*, and/or an update to such an approximation 1**.

This surrogate approximation 1**, and/or the update thereto, may then be provided back to the edge system 10 in step 280. On the edge system 10, this new and/or updated surrogate approximation 1** may then be evaluated to obtain the prediction 5, according to block 212.

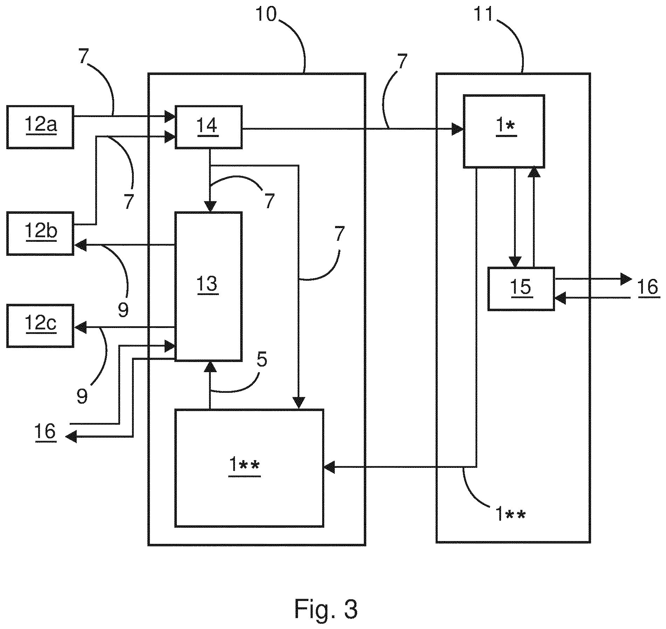

Figure 3 shows an exemplary arrangement of an edge system 10 and a cloud platform 11 that may be used for performing the method 200.

In the example shown in Figure 3, the industrial plant executing the process 2 comprises sensors 12a, actuators 12b and controllers 12c. Sensors 12a and actuators 12b produce samples 7 of data that is indicative of the state of the process 2. These samples are ingested and pre-processed by an edge data manager 14 of the edge system 10. They are passed on to the process control system 13, which in turn supplies control actions 9 to actuators 12b and controllers 12c to react to the state of the process 2 reflected in the samples 7.

When determining the control actions 9, the process control system 13 also considers a prediction 5 outputted by the surrogate approximation 1** as to the likelihood for occurrence of an undesired event. That is, the process control system 13 may steer, by means of the control actions 9, the process 2 in a manner that occurrence of the undesired event is avoided. Also, the process control system 13 is in communication with an operator 16 of the industrial plant.

The samples 7 are passed on to the cloud platform 11 where the trained prediction model 1* resides. They are used to further train this model 1*. After an update to the prediction model 1*, the cloud platform 11 also generates a corresponding update to the surrogate approximation 1**. This update is passed back to the edge system 10.

The cloud platform 11 also comprises an operational safety interface 15 by which it is in communication with the operator 16 of the plant.

### List of reference signs:

- 1: prediction model
- 1*: fully trained state of model 1
- 1**: surrogate approximation of trained model 1*
- 1a: parameters that characterize behavior of prediction model 1
- 1a*: fully optimized state of parameters 1a
- 2: process
- 2a: process model
- 2b: rules for increased likelihood of undesired events
- 3: training samples without increased likelihood of undesired event
- 4: training samples with increased likelihood of undesired event
- 5: prediction for likelihood of undesired event
- 6: loss function
- 6a: rating by loss function
- 7: samples acquired during execution of process 2
- 8: criterion for prediction 5
- 9: control action
- 10: edge system
- 11: cloud platform
- 12a: sensors
- 12b: actuators
- 12c: controllers
- 13: process control system for process 2
- 14: edge data manager
- 15: operational safety interface
- 16: operator of industrial plant
- 100: method for training prediction model 1
- 110: obtaining training samples 3
- 111: determining variables with impact on likelihood of undesired event
- 112: including variables with impact in training samples 3
- 113: including statistical moment in training samples 3
- 120: obtaining further training samples 4
- 121: choosing process model 2a that predicts future state

- 122: choosing particular kinds of process models 2a
- 123: including variables with impact in further training samples 4
- 124: including statistical moments in further training samples 4
- 130: providing training samples 3, 4 to prediction model 1
- 131: obtaining prediction at end of time frame
- 140: rating difference between prediction 5 and label of sample 3, 4
- 150: optimizing parameters 1a
- 160: creating surrogate approximation 1** for trained model 1*
- 200: method for executing process 2
- 210: providing samples 7 to trained prediction model 1*
- 211: collecting samples by edge system 10
- 212: evaluating surrogate approximation 1** on edge system 10
- 220: testing prediction against criterion 8
- 230: outputting alarm to operator 16
- 240: modifying execution of process
- 241: providing samples for candidate states to prediction model 1
- 242: steering process to avoid undesired event
- 250: providing samples 7 to cloud platform 11
- 260: training and/or updating prediction model 1
- 270: creating surrogate approximation 1**
- 280: providing update to edge system 10

## Claims

1. A computer-implemented method (100) for training a prediction model (1) for predicting the likelihood that at least one predetermined undesired event will occur during execution of a process (2) using training samples (3), wherein each training sample (3) comprises data that characterizes a state of the process (2), and the method (100) comprises the steps of:
• obtaining (110) training samples (3) representing states of the process (2) that do not cause the undesired event, and labelling these training samples with a pre-set low likelihood of the undesired event occurring;
• obtaining (120), based at least in part on a process model (2a) and a set of predetermined rules (2b) that stipulate in which states of the process (2) there is an increased likelihood of the undesired event occurring, further augmented training samples (4) representing states of the process (2) with an increased likelihood to cause the undesired event, and labelling these training samples (4) with said increased likelihood;
• providing (130) the obtained training samples (3, 4) to the to-be-trained prediction model (1), so as to obtain, from the prediction model (1), a prediction (5) of the likelihood for occurrence of the undesired event in a state of the process (2) represented by the respective sample (3, 4);
• rating (140) a difference between the prediction (5) and the label of the respective sample (3, 4) by means of a predetermined loss function (6); and
• optimizing (150) parameters (1a) that characterize the behavior of the prediction model (1), such that, when predictions (5) on further samples (3, 4) are made, the rating (6a) by the loss function (6) is likely to improve.

2. The method (100) of claim 1, wherein the undesired event comprises a safety interlock event that forces an at least partial stop and/or shutdown of the process (2), and/or of the industrial plant or electric network that is executing the process (2).

3. The method (100) of any one of claims 1 to 2, wherein the likelihood of the undesired event occurring is measured
• on a scale of a probability that the undesired event occurs; and/or
• on a scale of closeness of the state of the process (2) to a state that causes the undesired event to occur.

4. The method (100) of any one of claims 1 to 3,
wherein the process model (2a) is specifically configured (121) to predict a future evolution of the state of the process (2) based on at least one current and/or past state of the process (2).

5. The method (100) of any one of claims 1 to 4,
wherein the process model (2a) comprises (122):
• a machine learning model; and/or
• a simulation model; and/or
• a surrogate approximation of this simulation model.

6. The method (100) of any one of claims 1 to 5, further comprising:
• determining (111), based at least in part on the predetermined rules (2b), which of the variables that characterize the state of the process (2) have an impact on the likelihood of the undesired event occurring; and
• including (112, 123) these variables, and/or processing results obtained from these variables, in the training samples (3, 4).

7. The method (100) of any one of claims 1 to 6, further comprising: including (113, 124), in the training samples (3, 4), at least one statistical moment, and/or a time series, of at least one state variable of the process (2).

8. The method (100) of any one of claims 1 to 7, further comprising: obtaining (131), by the prediction model (1), a prediction (5) of the likelihood for occurrence of the undesired event at the end of a predetermined time window based on samples (3, 4) within this time window.

9. The method (100) of any one of claims 1 to 8, further comprising: approximating (160) the behavior of the trained prediction model (1*) by means of a surrogate model (1**) that is computationally cheaper to evaluate than the trained prediction model (1*).

10. A method (200) for executing a process (2) on at least one industrial plant or in at least one electric network, comprising the steps of:
• providing (210) one or more samples (7) representing a state of the process (2) to a prediction model (1*) that has been trained according to the method (100) of any one of claims 1 to 9, and/or to a surrogate approximation (1**) thereof, so as to obtain a prediction (5) of the likelihood for occurrence of the undesired event in a state of the process (2) represented by the one or more samples;
• testing (220) the prediction (5) against at least one predetermined criterion (8); and
• in response to the criterion (8) being met, outputting (230) an alarm to an operator (16) of the process (2), and/or modifying (240) the execution of the process (2) with the goal of reducing the likelihood for occurrence of the undesired event.

11. The method (100) of claim 10, wherein the modifying (240) the execution of the process comprises:
• providing (241) samples (7) representing multiple candidate states of the process (2) that are different from the current state of the process (2) to the prediction model (1), thereby obtaining likelihoods for occurrence of the undesired event for the candidate states; and
• steering (242) execution of the process (2) towards a candidate state with the least likelihood for occurrence of the undesired event as a target state.

12. The method (100) of claim 11, further comprising:
• collecting (211), by an edge system (10) of an industrial plant or other site that participates in executing the process (2), samples (7) representing states of the process (2);
• providing (250), by the edge system (10), the samples (7) to a cloud platform (11);
• training, and/or updating (260), on the cloud platform (11), based on the samples (7) obtained from the edge system (10), the prediction model (1);
• creating (270), by the cloud platform (11), a surrogate approximation (1**) for the trained and/or updated prediction model (1*), and/or an update to such an approximation (1**);
• providing (280), by the cloud platform (11), the surrogate approximation (1**), and/or the update thereto, to the edge system (10); and
• evaluating (212), on the edge system (10), the surrogate approximation (1**), so as to obtain the prediction (5) of the likelihood for occurrence of the undesired event.

13. A computer program, comprising machine-readable instructions that, when executed by one or more computers, cause the one or more computers to perform a method (100, 200) of any one of claims 1 to 12.

14. A non-transitory machine-readable storage medium, and/or a download product, with the computer program of claim 13.

15. One or more computers with the computer program of claim 13, and/or with the non-transitory machine-readable storage medium and/or download product of claim 14.

## Patentansprüche

1. Computer-implementes Verfahren (100) zum Trainieren eines Vorhersagemodells (1) für das Vorhersagen der Wahrscheinlichkeit, dass mindestens ein vorgegebenes unerwünschtes Ereignis während der Ausführung eines Prozesses (2) auftreten wird, unter Nutzung von Trainings-Beispielen (3), wobei jedes Trainings-Beispiel (3) Daten umfasst, die einen Zustand des Prozesses (2) charakterisieren, und das Verfahren (100) die Schritte umfasst:
• Beschaffen (110) von Trainings-Beispielen (3), die Zustände des Prozesses (2) repräsentieren, die das unerwünschte Ereignis nicht verursachen, und Labeln dieser Trainings-Beispiele mit einer vorgegebenen niedrigen Wahrscheinlichkeit, dass das unerwünschte Ereignis auftritt;
• Beschaffen (120) weiterer augmentierter Trainings-Beispiele (4), die Zustände des Prozesses (2) mit einer erhöhten Wahrscheinlichkeit, das unerwünschte Ereignis zu verursachen, repräsentieren, und Labeln dieser Trainings-Beispiele (4) mit besagter erhöhter Wahrscheinlichkeit, basierend mindestens zum Teil auf einem Prozessmodell (2a) und einem Satz vorgegebener Regeln (2b), die festlegen, in welchen Zuständen des Prozesses (2) es eine erhöhte Wahrscheinlichkeit dafür gibt, dass das unerwünschte Ereignis auftritt;
• Zuführen (130) der beschafften Trainings-Beispiele (3, 4) zu dem zu trainierenden Vorhersagemodell (1), um so von dem Vorhersagemodell (1) eine Vorhersage (5) der Wahrscheinlichkeit für das Auftreten des unerwünschten Ereignisses in einem Zustand des Prozesses (2), der durch das jeweilige Beispiel (3, 4) repräsentiert wird, zu erhalten;
• Bewerten (140) einer Differenz zwischen der Vorhersage (5) und dem Label des jeweiligen Beispiels (3, 4) mittels einer vorgegebenen Kostenfunktion (6); und
• Optimieren (150) von Parametern (1a), die das Verhalten des Vorhersagemodells (1) charakterisieren, so dass, wenn Vorhersagen (5) an weiteren Beispielen (3, 4) gemacht werden, die Bewertung (6a) durch die Kostenfunktion (6) sich voraussichtlich verbessert.

2. Verfahren (100) nach Anspruch 1, wobei das unerwünschte Ereignis ein Sicherheits-Interlock-Ereignis umfasst, das mindestens ein partielles Anhalten und/oder Herunterfahren des Prozesses (2), und/oder der Industrieanlage oder des elektrischen Netzwerks, die bzw. das den Prozess (2) ausführt, erzwingt.

3. Verfahren (100) nach einem der Ansprüche 1 bis 2, wobei die Wahrscheinlichkeit, dass das unerwünschte Ereignis auftritt,
• auf einer Skala einer Wahrscheinlichkeit, dass das unerwünschte Ereignis auftritt; und/oder
• auf einer Skala der Nähe des Zustandes des Prozesses (2) zu einem Zustand, der das Auftreten des unerwünschten Ereignisses auslöst, gemessen wird.

4. Verfahren (100) nach einem der Ansprüche 1 bis 3, wobei das Prozessmodell (2a) spezifisch dazu ausgebildet ist (121), eine künftige Entwicklung des Zustandes des Prozesses (2) basierend auf mindestens einem aktuellen und/oder vergangenen Zustand des Prozesses (2) vorherzusagen.

5. Verfahren (100) nach einem der Ansprüche 1 bis 4, wobei das Prozessmodell (2a):
• ein Machine Learning-Modell; und/oder
• ein Simulationsmodell; und/oder
• eine Surrogat-Näherung dieses Simulationsmodells umfasst (122).

6. Verfahren (100) nach einem der Ansprüche 1 bis 5, weiterhin umfassend:
• Ermitteln (111), welche der Variablen, die den Zustand des Prozesses (2) charakterisieren, einen Einfluss auf die Wahrscheinlichkeit für das Auftreten des unerwünschten Ereignisses haben, basierend mindestens zum Teil auf den vorgegebenen Regeln (2b); und
• Einbeziehen (112, 123) dieser Variablen, und/oder von aus diesen Variablen erhaltenen Verarbeitungsergebnissen, in die Trainings-Beispiele (3, 4).

7. Verfahren (100) nach einem der Ansprüche 1 bis 6, weiterhin umfassend: Einbeziehen (113, 124) mindestens eines statistischen Moments, und/oder einer Zeitreihe, mindestens einer Zustandsvariablen des Prozesses (2) in die Trainings-Beispiele (3, 4).

8. Verfahren (100) nach einem der Ansprüche 1 bis 7, weiterhin umfassend: Beschaffen (131) einer Vorhersage (5) für die Wahrscheinlichkeit des Auftretens des unerwünschten Ereignisses am Ende eines vorgegebenen Zeitfensters basierend auf Beispielen (3, 4) innerhalb dieses Zeitfensters durch das Vorhersagemodell (1).

9. Verfahren (100) nach einem der Ansprüche 1 bis 8, weiterhin umfassend: Approximieren (160) des Verhaltens des trainierten Vorhersagemodells (1*) durch ein Surrogat-Modell (1**), das rechentechnisch billiger auszuwerten ist als das trainierte Vorhersagemodell (1*).

10. Verfahren (200) zum Ausführen eines Prozesses (2) auf mindestens einer Industrieanlage oder in mindestens einem elektrischen Netzwerk, umfassend die Schritte:
• Zuführen (210) eines oder mehrerer Beispiele (7), die einen Zustand des Prozesses (2) repräsentieren, zu einem Vorhersagemodell (1*), das mit dem Verfahren (100) nach einem der Ansprüche 1 bis 9 trainiert worden ist, und/oder zu einer Surrogat-Näherung (1**) davon, um so eine Vorhersage (5) der Wahrscheinlichkeit für das Auftreten des unerwünschten Ereignisses in einem Zustand des Prozesses (2), der durch das eine oder die mehreren Beispiele repräsentiert wird, zu erhalten;
• Testen (220) der Vorhersage (5) gegen mindestens ein vorgegebenes Kriterium (8); und
• in Antwort darauf, dass das Kriterium (8) erfüllt ist, Ausgeben (230) eines Alarms an einen Bediener (16) des Prozesses (2), und/oder Verändern (240) der Ausführung des Prozesses (2), mit dem Ziel, die Wahrscheinlichkeit für das Auftreten des unerwünschten Ereignisses zu reduzieren.

11. Verfahren (100) nach Anspruch 10, wobei das Verändern (240) der Ausführung des Prozesses umfasst:
• Zuführen (241) von Beispielen (7), die mehrere vom aktuellen Zustand des Prozesses (2) verschiedene Kandidaten-Zustände des Prozesses (2) repräsentieren, zum Vorhersagemodell (1), so dass Wahrscheinlichkeiten für das Auftreten des unerwünschten Ereignisses für die Kandidaten-Zustände erhalten werden; und
• Steuern (242) der Ausführung des Prozesses (2) hin zu einem Kandidaten-Zustand mit der geringsten Wahrscheinlichkeit für das Auftreten des unerwünschten Ereignisses als Zielzustand.

12. Verfahren (100) nach Anspruch 11, weiterhin umfassend:
• Sammeln (211) von Beispielen (7), die Zustände des Prozesses (2) repräsentieren, durch ein Edge-System (10) einer Industrieanlage oder einer anderen Liegenschaft, die an der Ausführung des Prozesses (2) teilnimmt;
• Zuführen (250) der Beispiele (7) zu einer Cloud-Plattform (11) durch das Edge-System (10);
• Trainieren, und/oder Updaten (260), des Vorhersagemodells (1) auf der Cloud-Plattform (11), basierend auf den vom Edge-System erhaltenen Beispielen (7);
• Erstellen (270) einer Surrogat-Näherung (1**) für das trainierte und/oder geupdatete Vorhersagemodell (1*), und/oder eines Updates zu einer solchen Näherung (1**), durch die Cloud-Plattform (11);
• Zuführen (280) der Surrogat-Näherung (1**), und/oder des Updates hierzu, zu dem Edge-System (10) durch die Cloud-Plattform (11); und
• Auswerten (212) der Surrogat-Approximation (1**) auf dem Edge-System (10), um so die Vorhersage (5) der Wahrscheinlichkeit für das Auftreten des unerwünschten Ereignisses zu erhalten.

13. Computerprogramm, umfassend maschinenlesbare Anweisungen, die, wenn sie auf einem oder mehreren Computern ausgeführt werden, den einen oder die mehreren Computer dazu veranlassen, ein Verfahren (100, 200) nach einem der Ansprüche 1 bis 12 auszuführen.

14. Nicht-flüchtiges maschinenlesbares Speichermedium und/oder Downloadprodukt mit dem Computerprogramm nach Anspruch 13.

15. Ein oder mehrere Computer mit dem Computerprogramm nach Anspruch 13, und/oder mit dem nicht-flüchtigen maschinenlesbaren Speichermedium und/oder Downloadprodukt nach Anspruch 14.

## Revendications

1. Procédé (100), mis en œuvre par ordinateur, d'entraînement d'un modèle prédictif (1) pour prédire la vraisemblance de l'apparition d'au moins un événement indésirable prédéterminé durant l'exécution d'un processus (2) à l'aide d'échantillons d'entraînement (3), chaque échantillon d'entraînement (3) comprenant des données qui caractérisent un état du processus (2), et le procédé (100) comprenant les étapes suivantes :
• l'obtention (110) d'échantillons d'entraînement (3) représentant des états du processus (2) qui n'occasionnent pas l'événement indésirable, et le marquage de ces échantillons d'entraînement avec une faible vraisemblance prédéfinie d'apparition de l'événement indésirable ;
• l'obtention (120), sur la base au moins en partie d'un modèle de processus (2a) et d'un ensemble de règles prédéterminées (2b) qui stipulent les états du processus (2) dans lesquels il existe une vraisemblance accrue d'apparition de l'événement indésirable, d'échantillons d'entraînement (4) augmentés supplémentaires représentant des états du processus (2) avec une vraisemblance accrue d'occasionner l'événement indésirable, et le marquage de ces échantillons d'entraînement (4) avec ladite vraisemblance accrue ;
• la fourniture (130) des échantillons d'entraînement (3, 4) obtenus au modèle prédictif à entraîner (1), de manière à obtenir, à partir du modèle prédictif (1), une prédiction (5) de la vraisemblance d'apparition de l'événement indésirable dans un état du processus (2) représenté par l'échantillon (3, 4) respectif ;
• la cotation (140) d'une différence entre la prédiction (5) et le marqueur de l'échantillon (3, 4) respectif au moyen d'une fonction de perte (6) prédéterminée ; et
• l'optimisation (150) de paramètres (1a) qui caractérisent le comportement du modèle prédictif (1), de sorte que la cotation (6a) par la fonction de perte (6) soit susceptible de s'améliorer à la suite de prédictions (5) réalisées sur des échantillons (3, 4) supplémentaires.

2. Procédé (100) selon la revendication 1, dans lequel l'événement indésirable comprend un événement de verrouillage de sécurité qui force une interruption au moins partielle et/ou un arrêt au moins partiel du processus (2), et/ou de l'installation industrielle ou du réseau électrique qui est en train d'exécuter le processus (2).

3. Procédé (100) selon l'une quelconque des revendications 1 à 2, dans lequel la vraisemblance de l'apparition de l'événement indésirable est mesurée
• sur une échelle d'une probabilité d'apparition de l'événement indésirable ; et/ou
• sur une échelle de proximité de l'état du processus (2) par rapport à un état qui occasionne l'apparition de l'événement indésirable.

4. Procédé (100) selon l'une quelconque des revendications 1 à 3, dans lequel le modèle de processus (2a) est plus particulièrement configuré (121) pour prédire une évolution future de l'état du processus (2) sur la base d'au moins un état actuel et/ou passé du processus (2).

5. Procédé (100) selon l'une quelconque des revendications 1 à 4, dans lequel le modèle de processus (2a) comprend (122) :
• un modèle d'apprentissage machine ; et/ou
• un modèle de simulation ; et/ou
• une approximation par substitution de ce modèle de simulation.

6. Procédé (100) selon l'une quelconque des revendications 1 à 5, comprenant en outre les étapes suivantes :
• la détermination (111), sur la base au moins en partie des règles prédéterminées (2b), de celles des variables qui caractérisent l'état du processus (2) qui ont un impact sur la vraisemblance d'apparition de l'événement indésirable ; et
• l'incorporation (112, 123) de ces variables, et/ou de résultats de traitement obtenus à partir de ces variables, dans les échantillons d'entraînement (3, 4).

7. Procédé (100) selon l'une quelconque des revendications 1 à 6, comprenant en outre : l'incorporation (113, 124), dans les échantillons d'entraînement (3, 4), d'au moins un moment statistique, et/ou d'une série temporelle, d'au moins une variable d'état du processus (2).

8. Procédé (100) selon l'une quelconque des revendications 1 à 7, comprenant en outre : l'obtention (131), par le modèle prédictif (1), d'une prédiction (5) de la vraisemblance d'apparition de l'événement indésirable à la fin d'une fenêtre temporelle prédéterminée sur la base d'échantillons (3, 4) au sein de cette fenêtre temporelle.

9. Procédé (100) selon l'une quelconque des revendications 1 à 8, comprenant en outre : l'approximation (160) du comportement du modèle prédictif entraîné (1*) au moyen d'un modèle par substitution (1**) dont l'évaluation est moins coûteuse en calculs que le modèle prédictif entraîné (1*).

10. Procédé (200) d'exécution d'un processus (2) sur au moins une installation industrielle ou dans au moins un réseau électrique, comprenant les étapes suivantes :
• la fourniture (210) d'un ou de plusieurs échantillons (7) représentant un état du processus (2) au modèle prédictif (1*) qui a été entraîné conformément au procédé (100) selon l'une quelconque des revendications 1 à 9 et/ou à une approximation par substitution (1**) de celui-ci, de manière à obtenir une prédiction (5) de la vraisemblance d'apparition de l'événement indésirable dans un état du processus (2) représenté par les un ou plusieurs échantillons ;
• le test (220) de la prédiction (5) par rapport à au moins un critère prédéterminé (8) ; et
• si le critère (8) est rempli, l'émission (230) d'une alarme à l'intention d'un opérateur (16) du processus (2) et/ou la modification (240) de l'exécution du processus (2) dans le but de réduire la vraisemblance d'apparition de l'événement indésirable.

11. Procédé (100) selon la revendication 10, dans lequel la modification (240) de l'exécution du processus comprend :
• la fourniture (241) d'échantillons (7) représentant de multiples états candidats du processus (2) différents de l'état actuel du processus (2) au modèle prédictif (1), permettant l'obtention de vraisemblances d'apparition de l'événement indésirable pour les états candidats ; et
• le pilotage (242) de l'exécution du processus (2) vers un état candidat avec la plus faible vraisemblance d'apparition de l'événement indésirable, en tant qu'état cible.

12. Procédé (100) selon la revendication 11, comprenant en outre :
• la collecte (211), par un système périphérique (10) d'une installation industrielle ou autre site participant à l'exécution du processus (2), d'échantillons (7) représentant des états du processus (2) ;
• la fourniture (250), par le système périphérique (10), des échantillons (7) à une plateforme cloud (11) ;
• l'entraînement et/ou la mise à jour (260), sur la plateforme cloud (11), sur la base des échantillons (7) obtenus à partir du système périphérique (10), du modèle prédictif (1) ;
• la création (270), par la plateforme cloud (11), d'une approximation par substitution (1**) pour le modèle prédictif entraîné et/ou mis à jour (1*), et/ou d'une mise à jour d'une telle approximation (1**) ;
• la fourniture (280), par la plateforme cloud (11), de l'approximation par substitution (1**), et/ou de sa mise à jour, au système périphérique (10) ; et
• l'évaluation (212), sur le système périphérique (10), de l'approximation par substitution (1**), de manière à obtenir la prédiction (5) de la vraisemblance d'apparition de l'événement indésirable.

13. Programme d'ordinateur, comprenant des instructions lisibles par machine qui, lorsqu'elles sont exécutées par un ou plusieurs ordinateurs, amènent les un ou plusieurs ordinateurs à réaliser un procédé (100, 200) selon l'une quelconque des revendications 1 à 12.

14. Support de stockage non transitoire lisible par machine et/ou produit à télécharger, pourvu du programme d'ordinateur selon la revendication 13.

15. Ordinateur(s) pourvu(s) du programme d'ordinateur selon la revendication 13 et/ou du support de stockage non transitoire lisible par machine et/ou du produit à télécharger selon la revendication 14.
